# EUROPÄISCHE PATENTSCHRIFT

(11) **EP 4 075 041 B1**
(45) Veröffentlichungstag und Bekanntmachung des Hinweises auf die Patenterteilung: **10.05.2023**
(21) Anmeldenummer: 21168896.5
(22) Anmeldetag: 16.04.2021
(51) Int. Cl.: F16L 27/04, F16L 41/18, F16L 25/14

(54) **ANSCHLUSSVORRICHTUNG ZUM ANSCHLIESSEN EINES ANSCHLUSSROHRS AN EIN HAUPTROHR**
CONNECTION DEVICE FOR CONNECTING A PIPE TO A MAIN PIPE
DISPOSITIF DE RACCORDEMENT PERMETTANT DE RACCORDER UN TUYAU DE RACCORDEMENT À UN TUYAU PRINCIPAL

(43) Veröffentlichungstag der Anmeldung: 19.10.2022
(73) Patentinhaber: Poloplast GmbH & Co. KG, 4060 Leonding (AT)
(72) Erfinder: BRANDSTÄTTER-FELBER, Simone, 4851 Gampern (AT); MAYRBÄURL, Erwin, 4481 Asten (AT)
(74) Vertreter: Hoefer & Partner Patentanwälte mbB

(56) Entgegenhaltungen:
- DE-A1-102008 000 049
- JP-A- H1 030 774
- US-A- 4 917 408

## Beschreibung

Die vorliegende Erfindung betrifft eine Anschlussvorrichtung, beispielsweise ausgebildet als Hausanschluss, zum Anschließen eines Anschlussrohrs an ein Hauptrohr.

Bekannte Anschlussvorrichtungen, insbesondere für den Hausanschluss, zum Anschließen einer Anschlussleitung (Anschlussrohr) an eine Hauptleitung (Hauptrohr) sind infolge der bereitzustellenden Dichtheit der Verbindung zwischen Hauptrohr und Anschlussvorrichtung meist aufwendig gestaltet. Darüber hinaus gibt es unterschiedlich dimensionierte Anschlussleitungen, so dass eine Vielzahl unterschiedlicher Anschlussvorrichtungen nötig ist.

Eine beispielhafte Konstruktion zur Anbindung einer Anschlussleitung an eine Hauptleitung zeigt EP 0 930 455 A1. Dabei wird ein Kugelgelenk zum Anschließen des Anschlussrohrs verwendet. Durch die Verwendung des Kugelgelenks ist es möglich, das Anschlussrohr spannungsfrei einzubauen, da eine Auswinkelbarkeit um einige Grad zur Anschlussrichtung möglich ist. Wird das Anschlussrohr zur Anschlussrichtung ausgewinkelt, so kommt es unweigerlich zu einer Einschnürung des Durchflussquerschnitts. Derartige Einschnürungen sind nachteilig, da hierdurch die hydraulische Leistung des gesamten Rohrsystems beeinträchtigt wird.

US 4 917 408 A zeigt ein Kugelgelenk für flüssigkeitsführende Rohre. Dabei ist ein Elastomerkörper auf den Außenumfang eines Spitzendes aufgeklebt. Mit diesem Elastomerkörper steckt das Rohr drehbar in einer kugelförmigen Aufnahme eines weiteren Rohres.

JP H10 30774 A zeigt zwei ineinander gesteckte Rohrkörper, die beide kugelförmig ausgestaltet sind und aneinander gleiten. Im inneren Rohrkörper steckt ein Anschlussstück, in das ein Rohr einsteckbar ist.

DE 10 2008 000 049 A1 zeigt eine Hausanschlussvorrichtung zum dichten Verbinden eines Abwasserrohrs mit einer Öffnung in einem dickwandigen Kanalrohr. Dabei ist ein Kugelgelenkstutzen vorgesehen, in den das Abwasserrohr eingesteckt werden kann.

Es ist Aufgabe vorliegender Erfindung, eine Anschlussvorrichtung zum Anschließen eines Anschlussrohrs an ein Hauptrohr anzugeben, die einen einfach zu montierenden, dichten und vielseitig einsetzbaren Anschluss ermöglicht.

Die Lösung der Aufgabe erfolgt durch die Merkmale des unabhängigen Anspruchs. Die abhängigen Ansprüche haben vorteilhafte Ausgestaltungen der Erfindung zum Gegenstand. Die Erfindung zeigt eine Anschlussvorrichtung zum Anschließen eines Anschlussrohrs an ein Hauptrohr. Bei dem Anschlussrohr handelt es sich insbesondere um eine Anschlussleitung, die von einem Gebäude oder Schacht zur Kanalisation führt. Das Hauptrohr ist insbesondere ein Kanalrohr.

Die Anschlussvorrichtung umfasst ein Gehäuse. Das Gehäuse ist an dem Hauptrohr montierbar. Insbesondere wird hierzu ein Sattelstück verwendet, das am Hauptrohr angeordnet wird. Das Gehäuse wiederum wird vorzugsweise mit dem Sattelstück verschraubt.

Das Gehäuse weist einen Kugelkörper auf. Der Kugelkörper weist eine kugelscheibenförmige Innenfläche auf. Die kugelscheibenförmige Innenfläche weist die Form einer Hohlkugel auf, die an den beiden Polseiten aufgeschnitten ist. Von einer Seite führt eine Öffnung in das Gehäuse und somit in den von der kugelscheibenförmigen Innenfläche umschlossenen Bereich. Die Öffnung dient zum Einführen eines Adapterstücks. Der Öffnung gegenüberliegend geht die kugelscheibenförmige Innenfläche in einen rohrförmigen Auslass über. Bei der Montage der Anschlussvorrichtung am Hauptrohr ist dieser rohrförmige Auslass dem Hauptrohr zuzuwenden. Insbesondere ist vorgesehen, dass der rohrförmige Auslass ein Gewinde aufweist, das in das Sattelstück ein oder aufschraubbar ist.

Im Inneren des Gehäuses, insbesondere im Inneren des Kugelkörpers des Gehäuses, befindet sich ein Schwenkstutzen. Der Schwenkstutzen liegt drehbeweglich an der kugelscheibenförmigen Innenfläche an und gleitet auf dieser Fläche. Dadurch bilden die kugelscheibenförmige Innenfläche und der Schwenkstutzen ein Kugelgelenk. Der Schwenkstutzen ist um einige Grad in beliebiger Richtung schwenkbar, wodurch ein in dem Schwenkstutzen steckendes Anschlussrohr gegenüber der Anschlussrichtung auswinkelbar ist. Die Anschlussrichtung entspricht der Längsachse des rohrförmigen Auslasses bzw. der Lotgeraden auf das Hauptrohr.

Der Schwenkstutzen weist eine ringförmige erste Aufnahme zum Einstecken eines Anschlussrohrs mit einem ersten Außendurchmesser auf. Hierzu ist der Schwenkstutzen insbesondere als hohler, ringförmiger Körper ausgebildet. Der Innendurchmesser der ersten Aufnahme ist insbesondere zum dichten Einstecken eines Anschlussrohrs mit 200 mm Außendurchmesser ausgebildet.

Des Weiteren umfasst die Anschlussvorrichtung das bereits erwähnte Adapterstück. Anstatt des Anschlussrohrs mit dem ersten Außendurchmesser wird das Adapterstück in die erste Aufnahme des Schwenkstutzens eingesteckt. Das Adapterstück ist insbesondere ein innen hohler, ringförmiger Körper, der in die erste Aufnahme dichtend einsteckbar ist. Des Weiteren ist bevorzugt vorgesehen, dass das Adapterstück zerstörungsfrei aus dem Schwenkstutzen demontierbar ist. Insbesondere ist das Adapterstück dabei ohne Werkzeug, also werkzeuglos, demontierbar.

Das Adapterstück weist an seiner Innenfläche eine zweite Aufnahme auf. Diese zweite Aufnahme ist zum dichten Einstecken eines Anschlussrohrs mit einem zweiten Außendurchmesser ausgebildet. Dieser zweite Außendurchmesser ist kleiner als der erste Außendurchmesser. Insbesondere ist die zweite Aufnahme zum Einstecken eines Anschlussrohrs mit einem Außendurchmesser von 160 mm ausgebildet.

Das Adapterstück sitzt im Inneren des Schwenkstutzens bzw. ist zum Einstecken in den Schwenkstutzen ausgebildet. Im eingesetzten Zustand befindet sich dabei das Adapterstück im Inneren des Gehäuses. Es ist vorgesehen, dass sich die zweite Aufnahme im eingesetzten Zustand des Adapterstücks im Inneren des Gehäuses befindet. Die Verbindung zwischen dem eingesteckten Anschlussrohr und dem Adapterstück befindet sich somit im Inneren des Gehäuses und somit auch im Inneren des Kugelgelenks. Dadurch wird sichergestellt, dass die Verbindung zwischen Adapterstück und eingestecktem Anschlussrohr bei einem Auswinkeln bzw. bei einem Bewegen des Kugelgelenks möglichst wenig Belastung erfährt und somit möglichst dichthält.

Vorzugsweise weist das Adapterstück auf seiner dem Anschlussrohr zugewandten Einlassseite eine über den Schwenkstutzen hinausragende Verlängerung auf. Diese Verlängerung wirkt mit einem Schwenkanschlag des Gehäuses zur Begrenzung der Schwenkbewegung des Schwenkstutzens zusammen, indem die Verlängerung bei maximalem Schwenkwinkel an dem Schwenkanschlag anliegt.

Insbesondere ragt die Verlängerung mit dem Außendurchmesser des ersten Anschlussrohres aus dem Schwenkstutzen soweit heraus, dass eine gegenüber dem ersten Außendurchmesser erhöhte Auswinkelbarkeit vermieden wird. Dadurch wird verhindert, dass der Schwenkstutzen durch übermäßige Auswinkelung undicht wird.

Erfindungsgemäß weist das Adapterstück an seinem dem Auslass zugewandten Ende eine Verlängerung mit einem Divergenzbereich auf. Dieser Divergenzbereich hat einen sich stufenlos erweiternden Innendurchmesser. Der Divergenzbereich ist insbesondere so ausgestaltet, dass bei der maximal möglichen Auswinkelung des Anschlussrohrs keine Einschnürung des Strömungsquerschnitts stattfindet.

Der Divergenzbereich erstreckt sich vorzugsweise von einem dem Einlass zugewandten Ende bis zu einem dem Auslass zugewandten Ende. Am einlassseitigen Ende weist der Divergenzbereich vorzugsweise seinen kleinsten Divergenz-Innendurchmesser auf. Am auslassseitigen Ende weist der Divergenzbereich vorzugsweise seinen größten Divergenzbereich-Innendurchmesser auf. Der kleinste Divergenzbereich-Innendurchmesser entspricht vorzugsweise dem Innendurchmesser des einzusteckenden Anschlussrohrs.

In Richtung des Auslasses ragt der Divergenzbereich erfindungsgemäß über den Schwenkstutzen hinaus. Der Divergenzbereich erstreckt sich somit in Richtung des Auslasses weiter als der Schwenkstutzen.

Des Weiteren ist bevorzugt vorgesehen, dass das auslassseitige Ende des Divergenzbereichs im Bereich der kugelscheibenförmigen Innenfläche angeordnet ist. Dies bedeutet, dass der Divergenzbereich vorzugsweise nicht bis in den Auslass ragt, sondern sich vollständig innerhalb des Kugelkörpers und somit vollständig innerhalb der kugelscheibenförmigen Innenfläche befindet. Dadurch bewegt sich das auslassseitige Ende des Divergenzbereichs bei einem Verschwenken des Kugelgelenks innerhalb der kugelscheibenförmigen Innenfläche. Durch diese Gestaltung, und dadurch, dass sich der Divergenzbereich in Richtung des Auslasses über den Schwenkstutzen hinaus erstreckt, führt der Divergenzbereich möglichst nahe an die kugelscheibenförmige Innenfläche und vermeidet im gesamten Schwenkbereich eine Einschnürung des Strömungsquerschnitts.

Der größte Divergenzbereich-Innendurchmesser ist vorzugsweise an den Auslass-Innendurchmesser des Auslasses angepasst. Der rohrförmige Auslass weist hierbei vorzugsweise einen konstanten Auslass-Innendurchmesser auf. Die kugelscheibenförmige Innenfläche geht vorzugsweise in diesen rohrförmigen Auslass über.

Vorzugsweise ist definiert, dass ein Verhältnis des größten Divergenzbereich-Innendurchmessers zum Auslass-Innendurchmesser zwischen 0,80 und 1,20, vorzugsweise zwischen 0,85 und 1,15, besonders vorzugsweise zwischen 0,90 und 1,10, liegt. Besonders bevorzugt ist dabei vorgesehen, dass das Verhältnis größer als 1 ist, so dass der größte Divergenzbereich-Innendurchmesser etwas größer ist als der Auslass-Innendurchmesser.

Des Weiteren ist bevorzugt vorgesehen, insbesondere um eine Einschnürung des Querschnitts weitestgehend zu vermeiden, dass der kleinste Divergenzbereich-Innendurchmesser höchsten 0,95, vorzugsweise höchsten 0,90, besonders vorzugsweise höchsten 0,85, des Auslass-Innendurchmessers beträgt.

Das Adapterstück weist vorzugsweise einen Anschlag für das einzusteckende Anschlussrohr auf. Dieser Anschluss bildet insbesondere das auslassseitige Ende der zweiten Aufnahme.

Des Weiteren weist die zweite Aufnahme vorzugsweise eine Dichtung auf. Das Anschlussrohr ist in diese zweite Dichtung einsteckbar, wobei die Dichtung zum Anschlussrohr und Adapterstück abdichtet.

Vorzugsweise weist das Adapterstück nur einen, ringförmigen Grundkörper auf. Dieser ist als Spritzgussteil gefertigt. Zusätzlich zu diesem Grundkörper kann das Adapterstück die beschriebene Dichtung aufweisen. Die Dichtung ist entweder in eine Dichtungsnut im Grundkörper eingelegt oder in einem 2-Komponenten-Spritzgussverfahren zusammen mit dem Grundkörper gefertigt.

Der Schwenkstutzen weist bevorzugt eine Aufnahme als Anschlag für das größere der beiden Anschlussrohre auf. Bevorzugt kann dieser Anschlag auch als Anschlag für das einzusteckende Adapterstück verwendet werden.

Des Weiteren ist bevorzugt vorgesehen, dass der Schwenkstutzen in der ersten Aufnahme eine Dichtung aufweist. Die Dichtung dichtet zwischen Adapterstück und Schwenkstutzen ab. Wenn das Adapterstück nicht verwendet wird, dichtet diese Dichtung zwischen dem Anschlussrohr (z.B. DN200) und dem Schwenkstutzen ab.

Bevorzugt ist vorgesehen, dass der Schwenkstutzen aus nur einem, ringförmigen Grundkörper besteht. Dieser Grundkörper ist als Spritzgussteil gefertigt. Der Grundkörper kann eine Dichtungsnut zum Einlegen einer Dichtung aufweisen. Alternativ ist es auch möglich, den Grundkörper samt der Dichtung im 2-Komponenten-Spritzgussverfahren zu fertigen.

An der Außenseite des Schwenkstutzens kann eine Dichtung zwischen Schwenkstutzen und kugelscheibenförmiger Innenfläche angeordnet sein. Insbesondere weist der Schwenkstutzen hierzu eine nach außen offene Dichtungsnut zum Einlegen dieser Dichtung auf.

Weitere Einzelheiten, Vorteile und Merkmale der vorliegenden Erfindung ergeben sich aus nachfolgender Beschreibung eines Ausführungsbeispiels anhand der Zeichnung. Es zeigt:
- Fig. 1: eine Anschlussvorrichtung an einem Hauptrohr mit eingestecktem ersten Anschlussrohr ohne Adapterstück,
- Fig. 2: die erfindungsgemäße Anschlussvorrichtung mit Adapterstück und eingestecktem zweiten Anschlussrohr, und
- Fig. 3: die erfindungsgemäße Anschlussvorrichtung mit Adapterstück und eingestecktem zweiten Anschlussrohr bei maximaler Auswinkelung.

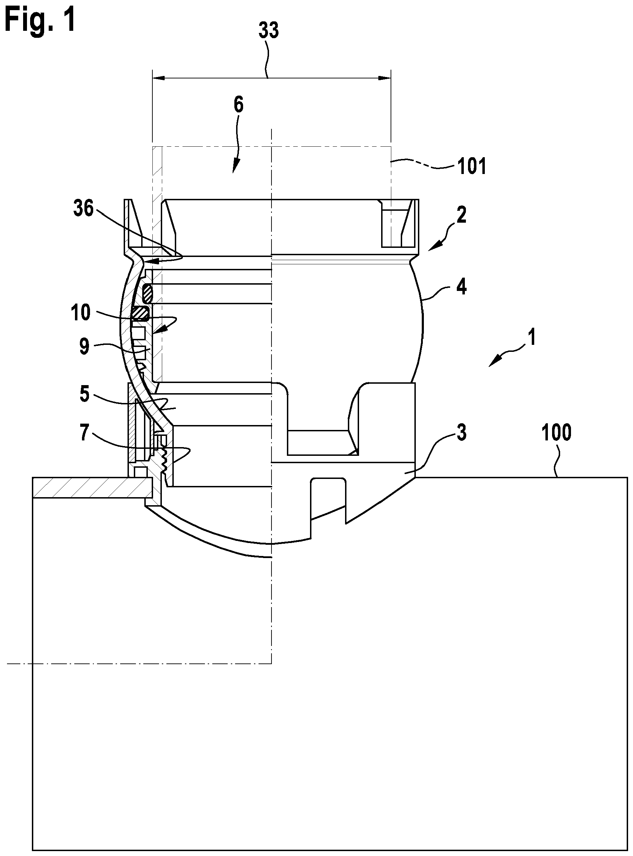

Im Folgenden wird eine Anschlussvorrichtung 1 anhand der Fig. 1 bis 3 gemäß dem Ausführungsbeispiel im Detail beschrieben. In Fig. 1 ist ein Adapterstück 20, welches Bestandteil der erfindungsgemäßen Anschlussvorrichtung 1 ist, nicht gezeigt.

Fig. 1 zeigt ein Hauptrohr 100, ein erstes Anschlussrohr 101 (z.B. DN200) und die Anschlussvorrichtung 1. Die Anschlussvorrichtung 1 umfasst ein Gehäuse 2 und ein Sattelstück 3. Das Sattelstück 3 liegt innen am Hauptrohr 100 an und erstreckt sich durch eine Öffnung im Hauptrohr 100 nach außen. Das Gehäuse 2 ist mit einem Außengewinde 8 in das Sattelstück 3 eingeschraubt.

Das Gehäuse 2 weist einen Kugelkörper 4 auf. Im Inneren des Kugelkörpers 4 ist eine kugelscheibenförmige Innenfläche 5 ausgebildet. An einer Seite führt eine Öffnung 6 in den durch die kugelscheibenförmige Innenfläche 5 gebildeten Bereich. Gegenüberliegend geht die kugelscheibenförmige Innenfläche 5 in einen rohrförmigen Auslass 7 über.

An der Außenseite des rohrförmigen Auslasses 7 befindet sich das Außengewinde 8 zum Einschrauben in das Sattelstück 3.

Im Inneren des Kugelkörpers 5 befindet sich ein Schwenkstutzen 9. Der Schwenkstutzen 9 liegt an der kugelscheibenförmigen Innenfläche 5 gleitend an und bildet somit zusammen mit der kugelscheibenförmigen Innenfläche 5 ein Kugelgelenk.

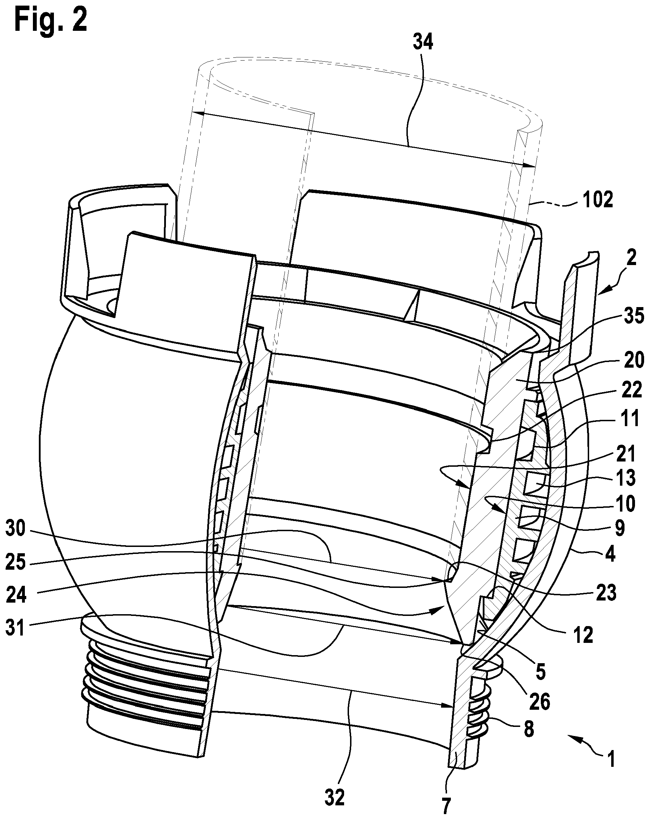

Die Innenfläche des Schwenkstutzens 9 ist als erste Aufnahme 10 ausgebildet. Diese erste Aufnahme 10 erstreckt sich bis zu einem ersten Anschlag 12 (s. Fig. 2). Des Weiteren befindet sich in der ersten Aufnahme 10 eine erste Dichtungsnut 11, in der eine ringförmige Dichtung eingelegt werden kann.

In die erste Aufnahme 10, durch die erste Dichtung hindurch, bis zum ersten Anschlag 12, ist das erstes Anschlussrohr 101 einsteckbar. Im gezeigten Ausführungsbeispiel weist das erste Anschlussrohr 101 einen ersten Außendurchmesser 33 von 200 mm auf.

An der Außenseite des Schwenkstutzens 9 ist eine Außendichtungsnut 13 zur Aufnahme einer entsprechenden, ringförmigen Dichtung vorgesehen.

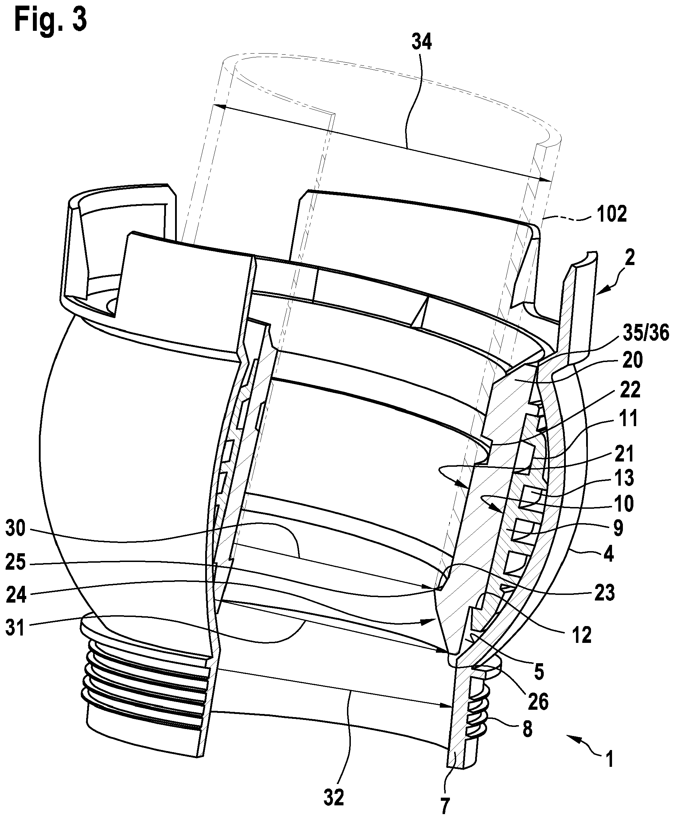

In den Fig. 2 und 3 steckt in dem Schwenkstutzen 9 und somit in der ersten Aufnahme 10 nicht das erste Anschlussrohr 101, sondern ein Adapterstück 20. Das Adapterstück 20 weist eine zweite Aufnahme 21 auf. Die zweite Aufnahme 21 befindet sich im Inneren des Gehäuses 2.

Die zweite Aufnahme 21 weist eine zweite Dichtungsnut 22 auf. In diese zweite Dichtungsnut 22 wird eine ringförmige zweite Dichtung eingelegt.

Die zweite Aufnahme 21 erstreckt sich bis zu einem zweiten Anschlag 23. Ein zweites Anschlussrohr 102, im gezeigten Beispiel mit einem zweiten Außendurchmesser 34 von 160 mm, ist in die zweite Aufnahme 21 des Adapterstücks 20 eingesetzt. Dabei erstreckt sich das zweite Anschlussrohr 102 durch die zweite Dichtung hindurch bis zum zweiten Anschlag 23.

In den Fig. 2 und 3 sind die Dichtungen der Übersichtlichkeit halber ausgeblendet, deren Position ist jedoch durch die entsprechenden Dichtungsnuten gegeben.

Einlassseitig ist am Adapterstück 20 auf der dem Anschlussrohr 102 zugewandten Seite eine Verlängerung 35 vorhanden, die mit einem Schwenkanschlag 36 des Gehäuses 2 zur Begrenzung der winkelmäßigen Beweglichkeit des Schwenkstutzens 9 zusammenwirkt. Auslassseitig ist am Adapterstück ein Divergenzbereich 24 ausgebildet. Dieser Divergenzbereich 24 erstreckt sich von seinem einlassseitigen Ende 25 zu seinem auslassseitigen Ende 26. Im gezeigten Ausführungsbeispiel ist das einlassseitige Ende 25 des Divergenzbereichs 24 unmittelbar am zweiten Anschlag 23 positioniert.

Der Divergenzbereich 24 erstreckt sich in Richtung des Auslasses 7 bis über den Schwenkstutzen 9 hinaus. Allerdings endet der Divergenzbereich 24 mit seinem auslassseitigen Ende 26 noch innerhalb der kugelscheibenförmigen Innenfläche 5.

Der Divergenzbereich 24 weist einen kleinsten Divergenzbereich-Innendurchmesser 30 am einlassseitigen Ende 25 auf. Am auslassseitigen Ende 26 weist der Divergenzbereich 24 einen größten Divergenzbereich-Innendurchmesser 31 auf. Der rohrförmige Auslass 7 weist einen Auslass-Innendurchmesser 32 auf. Die Verhältnisse dieser Durchmesser wurden bereits im allgemeinen Teil ausführlich erläutert.

### Bezugszeichenliste

- 1: Anschlussvorrichtung
- 2: Gehäuse
- 3: Sattelstück
- 4: Kugelkörper
- 5: kugelscheibenförmige Innenfläche
- 6: Öffnung
- 7: Auslass
- 8: Außengewinde
- 9: Schwenkstutzen
- 10: erste Aufnahme
- 11: erste Dichtungsnut
- 12: erster Anschlag
- 13: Außendichtungsnut
- 20: Adapterstück
- 21: zweite Aufnahme
- 22: zweite Dichtungsnut
- 23: zweiter Anschlag
- 24: Divergenzbereich
- 25: einlassseitiges Ende
- 26: auslassseitiges Ende
- 30: kleinster Divergenzbereich-Innendurchmesser
- 31: größter Divergenzbereich-Innendurchmesser
- 32: Auslass-Innendurchmesser
- 33: erster Außendurchmesser
- 34: zweiter Außendurchmesser
- 35: Einlassseitige Verlängerung
- 36: Schwenkanschlag
- 100: Hauptrohr
- 101: erstes Anschlussrohr
- 102: zweites Anschlussrohr

## Patentansprüche

1. Anschlussvorrichtung (1) zum Anschließen eines Anschlussrohrs (101, 102) an ein Hauptrohr (100),
• mit einem am Hauptrohr (100) montierbaren Gehäuse (2) mit kugelscheibenförmiger Innenfläche (5), wobei das Gehäuse (2) eine Öffnung (6) zum Einführen des Anschlussrohrs (101, 102) und einen dem Hauptrohr (100) zuzuwendenden, rohrförmigen Auslass (7) aufweist,
• mit einem Schwenkstutzen (9), der drehbeweglich an der kugelscheibenförmigen Innenfläche (5) gleitet, wobei der Schwenkstutzen (9) eine erste Aufnahme (10) zum Einstecken eines Anschlussrohrs (101) mit einem ersten Außendurchmesser (33) aufweist,
• und mit einem in die erste Aufnahme (10) einsetzbaren oder eingesetzten Adapterstück (20), wobei das Adapterstück (20) eine zweite Aufnahme (21) zum Einstecken eines Anschlussrohrs (102) mit einem zweiten Außendurchmesser (34) aufweist und wobei sich die zweite Aufnahme (21) im eingesetzten Zustand des Adapterstücks (20) im Inneren des Gehäuses (2) befindet,
• wobei das Adapterstück (20) an seinem dem Auslass (7) zugewandten Ende einen Divergenzbereich (24) mit sich stufenlos erweiterndem Innendurchmesser aufweist, **dadurch gekennzeichnet, dass** der Divergenzbereich (24) in Richtung des Auslasses (7) über der Schwenkstutzen (9) hinaus ragt.

2. Anschlussvorrichtung nach Anspruch 1, wobei das Adapterstück (20) auf seiner dem Anschlussrohr (102) zugewandten Seite eine über den Schwenkstutzen (9) hinausragende Verlängerung (35) aufweist, die mit einem Schwenkanschlag (36) des Gehäuses (2) zur Begrenzung der winkelmäßigen Beweglichkeit des Schwenkstutzens (9) zusammenwirkt.

3. Anschlussvorrichtung nach einem der vorhergehenden Ansprüche, wobei das auslassseitige Ende (26) des Divergenzbereichs (24) im Bereich der kugelscheibenförmigen Innenfläche (5) angeordnet ist.

4. Anschlussvorrichtung nach einem der vorhergehendenAnsprüche, wobei der Divergenzbereich (24) an seinem auslassseitigen Ende (26) einen größten Divergenzbereich-Innendurchmesser (31) aufweist, wobei der Auslass (7) einen Auslass-Innendurchmesser (32) aufweist, wobei ein Verhältnis des größten Divergenzbereich-Innendurchmessers (31) zum Auslass-Innendurchmesser (32) zwischen 0,80 und 1,20, vorzugsweise zwischen 0,85 und 1,15, besonders vorzugsweise zwischen 0,90 und 1,10, liegt.

5. Anschlussvorrichtung nach einem der vorhergehenden Ansprüche, wobei der Divergenzbereich (24) an seinem einlassseitigen Ende (25) einen kleinsten Divergenzbereich-Innendurchmesser (30) aufweist, wobei der Auslass (7) den Auslass-Innendurchmesser (32) aufweist, wobei der kleinste Divergenzbereich-Innendurchmesser (30) höchstens 0,95, vorzugsweise höchstens 0,90, besonders vorzugsweise höchstens 0,85, des Auslass-Innendurchmessers (32) beträgt.

6. Anschlussvorrichtung nach einem der vorhergehenden Ansprüche, wobei das Adapterstück (20) einen Anschlag (23) für das einzusteckende Anschlussrohr (102) aufweist.

7. Anschlussvorrichtung nach einem der vorhergehenden Ansprüche, wobei das Adapterstück (20) aus dem Schwenkstutzen (9) zerstörungsfrei demontierbar ist.

8. Anschlussvorrichtung nach einem der vorhergehenden Ansprüche, wobei das Adapterstück (20) aus nur einem, ringförmigen Grundkörper als Spritzgussteil besteht, wobei vorzugsweise in der zweiten Aufnahme (21) eine Dichtung in den Grundkörper eingelegt oder im Zweikomponentenspritzgussverfahren in den Grundkörper integriert ist.

9. Anschlussvorrichtung nach einem der vorhergehenden Ansprüche, wobei der Schwenkstutzen (9) aus nur einem, ringförmigen Grundkörper als Spritzgussteil besteht, wobei vorzugsweise in der ersten Aufnahme (10) eine Dichtung in den Grundkörper eingelegt oder im Zweikomponentenspritzgussverfahren in den Grundkörper integriert ist.

10. Anschlussvorrichtung nach einem der vorhergehenden Ansprüche, umfassend ein am Hauptrohr (100) zu befestigendes Sattelstück (3), wobei der rohrförmige Auslass (7) des Gehäuses (2) ein in das Sattelstück (3) einschraubbares Außengewinde (8) aufweist.

11. Anschlussvorrichtung nach einem der vorhergehenden Ansprüche, wobei die erste Aufnahme (10) zum dichten Einstecken eines Anschlussrohrs (101) mit 200 mm Außendurchmesser ausgebildet ist und wobei die zweite Aufnahme (21) zum dichten Einstecken eines Anschlussrohrs (102) mit 160 mm Außendurchmesser ausgebildet ist.

## Claims

1. A connection device (1) for connecting a connection pipe (101, 102) to a main pipe (100),
- with a housing (2), which is mountable at the main pipe (100) and comprises a spherical disc-shaped inner surface (5), wherein the housing (2) comprises an opening (6) for the introducing of the connection pipe (101, 102) and a tubular outlet (7) facing the main pipe (100),
- with a swivel socket (9), which slides rotatably on the spherical disc-shaped inner surface (5), wherein the swivel socket (9) comprises a first receptacle (10) for the inserting of a connection pipe (101) with a first outer diameter (33),
- and with an adapter piece (20), which can be inserted or is inserted into the first receptacle (10), wherein the adapter piece (20) comprises a second receptacle (21) for the inserting a connection pipe (102) with a second outer diameter (34) and wherein the second receptacle (21) is arranged in the interior of the housing (2) in the inserted state of the adapter piece (20),
- wherein the adapter piece (20) comprises at its end facing the outlet (7) a divergence region (24) with a continuously widening inner diameter,
- **characterized in that** the divergence region (24) projects in direction of the outlet (7) above the swivel connection piece (9).

2. The connection device according to claim 1, wherein the adapter piece (20) comprises, on its side facing the connection pipe (102), an extension (35) projecting above the swivel socket (9) and cooperating with a swivel stop (36) of the housing (2) to limit the angular movement of the swivel socket (9).

3. The connection device according to any of the preceding claims, wherein the outlet-side end (26) of the divergence region (24) is arranged in the region of the spherical disc-shaped inner surface (5).

4. The connection device according to any of the preceding claims, wherein the divergence region (24) comprises a largest divergence region inner diameter (31) at its outlet-side end (26), wherein the outlet (7) comprises an outlet inner diameter (32), wherein a ratio of the largest divergence region inner diameter (31) to the outlet inner diameter (32) is between 0.80 and 1.20, preferably between 0.85 and 1.15, particularly preferably between 0.90 and 1.10.

5. The connection device according to any of the preceding claims, wherein the divergence region (24) comprises a smallest divergence region inner diameter (30) at its inlet-side end (25), wherein the outlet (7) comprises the outlet inner diameter (32), wherein the smallest divergence region inner diameter (30) comprises at most 0.95, preferably at most 0.90, particularly preferably at most 0.85, of the outlet inner diameter (32).

6. The connection device according to any of the preceding claims, wherein the adapter piece (20) comprises a stop (23) for the connection tube (102) to be inserted.

7. The connection device according to any of the preceding claims, wherein the adapter piece (20) is dismountable from the swivel socket (9) in a non-destructive manner.

8. The connection device according to any of the preceding claims, wherein the adapter piece (20) consists of only one, annular base body as an injection-moulded part, wherein a seal is preferably inserted into the base body in the second receptacle (21) or is integrated into the base body in the two-component injection-moulding process.

9. The connection device according to any of the preceding claims, wherein the swivel connection piece (9) consists of only one, annular base body as an injection-moulded part, wherein a seal is preferably inserted into the base body in the first receptacle (10) or is integrated into the base body in the two-component injection-moulding process.

10. The connection device according to any of the preceding claims, comprising a saddle piece (3) to be fixed at the main pipe (100), wherein the tubular outlet (7) of the housing (2) comprises an external thread (8), which can be screwed into the saddle piece (3).

11. The connection device according to any of the preceding claims, wherein the first receptacle (10) is formed for the sealed insertion of a connection pipe (101) with 200 mm outer diameter and wherein the second receptacle (21) is formed for the sealed insertion of a connection pipe (102) with 160 mm outer diameter.

## Revendications

1. Dispositif de raccordement (1) pour le raccordement d'un tube de raccordement (101, 102) à un tube principal (100),
- avec un boîtier (2) pouvant être monté au niveau du tube principal (100) avec une surface intérieure (5) en forme de rondelle sphérique, dans lequel le boîtier (2) présente une ouverture (6) pour l'introduction du tube de raccordement (101, 102) et une sortie (7) tubulaire à tourner vers le tube principal (100),
- avec une tubulure de pivotement (9) qui glisse de manière mobile en rotation sur la surface intérieure (5) en forme de rondelle sphérique, dans lequel la tubulure de pivotement (9) présente un premier logement (10) pour l'enfichage d'un tube de raccordement (101) avec un premier diamètre extérieur (33),
- et avec un adaptateur (20) inséré ou pouvant être inséré dans le premier logement (10), dans lequel l'adaptateur (20) présente un second logement (21) pour l'enfichage d'un tube de raccordement (102) avec un second diamètre extérieur (34) et dans lequel le second logement (21) se trouve dans l'état inséré de l'adaptateur (20) à l'intérieur du boîtier (2),
- dans lequel l'adaptateur (20) présente à son extrémité tournée vers la sortie (7) une zone de divergence (24) avec un diamètre intérieur s'élargissant en continu,
**caractérisé en ce que**
la zone de divergence (24) dépasse en direction de la sortie (7) de la tubulure de pivotement (9).

2. Dispositif de raccordement selon la revendication 1, dans lequel l'adaptateur (20) présente sur son côté tourné vers le tube de raccordement (102) un prolongement (35) dépassant de la tubulure de pivotement (9) qui coagit avec une butée de pivotement (36) du boîtier (2) pour limiter la mobilité angulaire de la tubulure de pivotement (9).

3. Dispositif de raccordement selon l'une quelconque des revendications précédentes, dans lequel l'extrémité côté sortie (26) de la zone de divergence (24) est agencée dans la zone de la surface intérieure (5) en forme de rondelle sphérique.

4. Dispositif de raccordement selon l'une quelconque des revendications précédentes, dans lequel la zone de divergence (24) présente à son extrémité (26) côté sortie un diamètre intérieur de zone de divergence (31) le plus grand, dans lequel la sortie (7) présente un diamètre intérieur de sortie (32), dans lequel un rapport entre le diamètre intérieur de zone de divergence (31) le plus grand et le diamètre intérieur de sortie (32) est compris entre 0,80 et 1,20, de préférence entre 0,85 et 1,15, de manière particulièrement préférée entre 0,90 et 1,10.

5. Dispositif de raccordement selon l'une quelconque des revendications précédentes, dans lequel la zone de divergence (24) présente à son extrémité (25) côté entrée un diamètre intérieur de zone de divergence (30) le plus petit, dans lequel la sortie (7) présente le diamètre intérieur de sortie (32), dans lequel le diamètre intérieur de zone de divergence (30) le plus petit s'élève au plus à 0,95, de préférence au plus à 0,90, de manière particulièrement préférée au plus à 0,85, du diamètre intérieur de sortie (32).

6. Dispositif de raccordement selon l'une quelconque des revendications précédentes, dans lequel l'adaptateur (20) présente une butée (23) pour le tube de raccordement (102) à enficher.

7. Dispositif de raccordement selon l'une quelconque des revendications précédentes, dans lequel l'adaptateur (20) peut être démonté de manière non destructive de la tubulure de pivotement (9).

8. Dispositif de raccordement selon l'une quelconque des revendications précédentes, dans lequel l'adaptateur (20) se compose d'un seul corps de base annulaire en tant que pièce moulée par injection, dans lequel de préférence dans le second logement (21), un joint étanche est introduit dans le corps de base ou est intégré dans le procédé de moulage par injection à deux composants dans le corps de base.

9. Dispositif de raccordement selon l'une quelconque des revendications précédentes, dans lequel la tubulure de pivotement (9) se compose d'un seul corps de base annulaire en tant que pièce moulée par injection, dans lequel de préférence dans le premier logement (10), un joint étanche est introduit dans le corps de base ou est intégré dans le procédé de moulage par injection à deux composants dans le corps de base.

10. Dispositif de raccordement selon l'une quelconque des revendications précédentes, comprenant une pièce de selle (3) à fixer au tube principal (100), dans lequel la sortie (7) tubulaire du boîtier (2) présente un filet extérieur (8) pouvant être vissé dans la pièce de selle (3).

11. Dispositif de raccordement selon l'une quelconque des revendications précédentes, dans lequel le premier logement (10) est réalisé pour l'enfichage étanche d'un tube de raccordement (101) avec un diamètre extérieur de 200 mm et dans lequel le second logement (21) est réalisé pour l'enfichage étanche d'un tube de raccordement (102) avec un diamètre extérieur de 160 mm.
